(19) Europäisches Patentamt / European Patent Office / Office européen des brevets

(11) **EP 4 645 624 A1**

(12) **EUROPEAN PATENT APPLICATION**

(43) Date of publication:
**05.11.2025 Bulletin 2025/45**

(21) Application number: **24173360.9**

(22) Date of filing: **30.04.2024**

(51) International Patent Classification (IPC):
$H02J\ 3/12$ [(2006.01)]  $H02J\ 3/46$ [(2006.01)]
$H02J\ 3/48$ [(2006.01)]  $H02J\ 3/50$ [(2006.01)]
$H02J\ 13/00$ [(2006.01)]

(52) Cooperative Patent Classification (CPC):
H02J 13/00032; H02J 3/12; H02J 3/46; H02J 3/48;
H02J 3/50

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Hitachi Energy Ltd
8050 Zürich (CH)**

(72) Inventors:
• **Bärlocher, Eugen
5300 Turgi (CH)**
• **Buchmann, Beat
5400 Baden (CH)**
• **Schlegel, Christian
8142 Uitikon (CH)**
• **Burch, Philipp
5630 Muri (CH)**

(74) Representative: **Epping - Hermann - Fischer
Patentanwaltsgesellschaft mbH
Schloßschmidstraße 5
80639 München (DE)**

(54) **METHOD FOR CONTROLLING A TRANSFORMER BY A CONTROL DEVICE INDIRECTLY, CONTROL DEVICE, SYSTEM, COMPUTER PROGRAM PRODUCT AND COMPUTER-READABLE STORAGE MEDIUM**

(57)     A method for controlling a transformer by a control device of a power converter is specified, wherein the power converter is arranged remote from the transformer, comprising:

- providing remote power information at a location of the transformer (S1),

- determining limited remote power information of the transformer dependent on the remote power information and a remote safe operating area ($SOA_{rem}$) of the transformer (S2),

- providing local power information at a location of the power converter (S3), and

- determining limited local power information of the power converter dependent on the local power information and a local safe operating area ($SOA_{loc}$) of the power converter (S4),

- controlling the transformer dependent on the limited local power information of the power converter (S5), wherein

- the limited local power information is characteristic for an active power and a reactive power based on which the power converter is operated, and

- a control mode of the active power and the reactive power of the limited local power information are selected independently from one another.

Furthermore, a control device, a system, a computer program product and a computer-readable storage medium are specified.

Fig 1

EP 4 645 624 A1

**Description**

The present disclosure relates to a method for controlling a transformer by a control device of a power converter, wherein the power converter is arranged remote from the transformer, a control device, a system, a computer program product, and a computer-readable storage medium.

A typical remote converter is used to connect power grids to transfer energy. Generally, the typical remote converter is exemplarily also used to remote control a catenary transformer and to protect the catenary transformer from an overcurrent.

Such a typical remote or local power control is not ideal due to a state of the grid and signal delay from the remote location.

Embodiments of the disclosure relate to a method for improving remote controlling. A further embodiment relates to a system configured to perform such a method, as well as a computer program product and a computer-readable storage medium.

This is achieved by the subject-matter of the independent claims. Further embodiments are evident from the dependent claims and the following description.

A method for controlling a transformer by a control device of a power converter, wherein the power converter is arranged remote from the transformer, is described.

The transformer is in particular arranged within a first grid. The first grid has, for example, a first power input to which the transformer is connected. Furthermore, the first grid has, for example, a first power output which is configured to provide power to a load. Exemplarily, the transformer is a passive device.

For example, the transformer is arranged between the first power input and the first power output. Exemplarily, the transformer comprises at least one transformer. The transformer is particularly configured to step up and/or to step down a voltage. If a voltage at the first power input is higher than a voltage to be provided to the first power output, the transformer is configured to step down the voltage of the first power input to the voltage of the first power output. If a voltage at the first power input is lower than a voltage to be provided to the first power output, the transformer is configured to step up the voltage of the first power input to the voltage of the first power output.

Exemplarily, the load is a train. Preferably, in railway applications the transformer is configured to step down a high voltage from the first power input to a lower voltage suitable for a catenary wire, for example.

The power converter comprises, for example, a plurality of power semiconductor switches, such as insulated gate bipolar transistors or IGBTs. Exemplarily, the power converter is a modular multilevel converter, MMC. The MMC comprises, for example, a plurality of individual power electronic modules arranged in a stack. Each power electronic module comprises, exemplarily, one or a plurality of semiconductor switches, capacitors, and/or other passive electrical components.

The first grid has, for example, a second power input to which the power converter is connected. Exemplarily, the power converter is connected between a second grid and the second power input of the first grid. In particular, the power converter is configured to connect the first grid and the second grid.

Exemplarily, the first grid and the second grid are equal to or different from one another with respect to their operating frequency. The power converter is exemplarily configured to step up or step down the operating frequency of the second grid to the operating frequency of the first grid. Additionally, the power converter is in particular configured to step up or step down an operating voltage of the second grid to a voltage of the first grid. If the transformer provides less voltage to the first power output, the power converter is configured to provide further power to the power output. This means that the power converter is configured, for example, to provide power to the first power output, which is configured to provide power to the load.

Preferably, in railway applications, the power converter is configured to step down a high operating frequency from the second grid to a low operating frequency of the first grid, for example. Additionally, in railway applications, the power converter is configured to step down a high voltage from the second grid to a low voltage of the first power output of the first grid, for example.

Particularly, the power converter is arranged spaced apart from the transformer. Exemplarily, a distance between the power converter and the transformer is at least 500 m or at least 1 km.

Additionally, the power converter comprises a control device. The control device is configured to determine power information. Exemplarily, the control device is configured to control an output of the power converter. In particular, the control device is configured to control an active power output and a reactive power output from the power converter.

According to an embodiment of the method, remote power information is provided at a location of the transformer. In particular, the remote power information is provided to the control device. Exemplarily, the remote power information is characteristic of an active power and/or a reactive power directly at the transformer and/or close to the transformer.

The active power at the location of the transformer can be a remote measured active power. In particular, the remote measured active power is characteristic of a measurement of the actual active power at the location of the transformer. The active power at the location of the transformer can be a remote reference active power. In particular, the remote reference active power is characteristic of the remote predetermined target active power of the transformer.

The reactive power at the location of the transformer can be a remote measured reactive power. In particular, the remote measured reactive power is characteristic of a measurement of an actual reactive power at the location of the transformer.

The reactive power at the location of the transformer can be a remote reference reactive power. In particular, the remote reference reactive power is characteristic of a remote predetermined target reactive power at the location of the transformer.

Exemplarily, the term "*active*" refers here and in the following to a component of power that performs actual work. The active power is measured, in particular, in watts [W] and represents the rate at which energy is consumed or generated in an electrical system. Exemplarily, the term "*reactive*" refers here and in the following to a component of power that oscillates between a source and a load without performing actual work. The reactive power is measured, in particular, in volt-amperes reactive [VAR].

According to the embodiment of the method, limited remote power information of the transformer is determined dependent on the remote power information and a remote safe operating area of the transformer. The limited remote power information is, for example, determined by the control device.

Exemplarily, the remote safe operating area is characteristic for a power region of the transformer within which operation of the transformer is considered safe and reliable without the risk of damage or failure of the transformer.

The remote safe operating area comprises, for example, a first remote safe operating area function and a second remote safe operating area function. For example, a limited remote active power information is determined dependent on a first remote safe operating area function for the active power and a limited remote reactive power information is determined dependent on a second remote safe operating area function for the reactive power. The first remote safe operating area function and the second remote safe operating area function are particularly dependent on one another.

Exemplarily, the limited remote power information is characteristic of a limited active power and/or a limited reactive power of the transformer.

The limited active power of the transformer can be a limited remote measured active power, particularly resulting from the remote measured active power at the location of the transformer limited by the first safe operating area function. The limited active power of the transformer can be a limited remote reference active power, particularly resulting from the remote reference active power at the location of the transformer limited by the first safe operating area function.

The limited reactive power of the transformer can be a limited remote measured reactive power, particularly resulting from the remote measured reactive power at the location of the transformer limited by the second safe operating area function. The limited reactive power of the transformer can be a limited remote reference reactive power, particularly resulting from the remote reference reactive power at the location of the transformer limited by the second safe operating area function.

According to the embodiment of the method, local power information is provided at a location of the power converter. Exemplarily, the local power information is characteristic of an active power and/or a reactive power directly at the power converter and/or close to the power converter.

The active power at the location of the power converter can be a local measured active power. In particular, the local measured active power is characteristic of a measurement of an actual active power at the location of the power converter. The active power at the location of the power converter can be a local reference active power. In particular, the local reference active power is characteristic of a local predetermined target active power of the power converter.

The remote predetermined target active power and the local predetermined target active power is, for example, characteristic of an active power to be provided to the load, exemplarily, to the first power output.

The reactive power at the location of the power converter can be a local measured reactive power. In particular, the local measured reactive power is characteristic of a measurement of an actual reactive power at the location of the power converter. The reactive power at the location of the power converter can be a local reference reactive power. In particular, the local reference reactive power is characteristic of a second local predetermined target reactive power of the power converter.

The remote predetermined target reactive power and the local predetermined target reactive power are for example, characteristic of a reactive power to be provided to the load, exemplarily, to the first power output.

According to the embodiment of the method, limited local power information of the power converter is determined dependent on the local power information and a local safe operating area of the power converter. The limited local power information is, for example, determined by the control device.

Exemplarily, the local safe operating area is characteristic of a power region of the power converter within which operation of the power converter is considered safe and reliable without the risk of damage or failure of the power converter.

The local safe operating area comprises, for example, a first local safe operating area function and a second local safe operating area function. For example, limited local active power information is determined dependent on a first local safe operating area function for the active power and limited local reactive power information is determined dependent on a second local safe operating area function for the reactive power. The first local safe operating area function and the second local safe operating area function are particularly dependent on one another.

Exemplarily, the limited local power information is characteristic for a limited local active power and/or a limited local reactive power of the power converter.

The limited local active power of the power converter is in particular a limited local reference active power, particularly resulting from an unlimited local reference active power at the location of the power converter limited by the first local safe operating area function.

The limited reactive power of the power converter is in particular a limited local reference reactive power, particularly resulting from an unlimited local reference reactive power at the location of the power converter limited by the second local safe operating area function.

According to the embodiment of the method, the transformer is controlled dependent on the limited local power information of the power converter. In particular, the control device is configured to control the active power output and the reactive power output from the power converter dependent on the limited local power information. This is to say that, based on the limited local power information, the active power and the reactive power are provided by the power converter. Exemplarily, the control device is configured to control the active power and the reactive power of the transformer, in particular via the active power output and the reactive power output from the power converter. This means, in particular, that the control device is configured to control the active power and the reactive power of the transformer dependent on the power injected to the first grid by the power converter.

According to the embodiment of the method, the limited local power information is characteristic for an active power, in particular the limited local reference active power, and a reactive power, in particular the limited local reference reactive power, based on which the power converter is operated.

According to the embodiment of the method, a control mode of the active power and the reactive power of the limited local power information are selected independently from one another. For example, the control mode is characteristic of a selection of which remote and local power information is initially provided to determine the limited local reference active power and the the limited local reference reactive power.

Exemplarily, the limited local reference active power is implemented in a first string of the method and the limited local reference reactive power is implemented in a second string of the method. The first string and the second string are each characteristic of a separate control loop. The first string and the second string are in particular carried out in parallel, e.g. simultaneously. The first string and the second string are advantageously executable with different control modes.

The method described herein advantageously enables the usage of the power converter to control the active and reactive power of the transformer and the power converter in a hybrid way using two separate control loops. Additionally, an augmented power reference calculation guarantees safe operation of a local site and a remote site corresponding to the power converter and the transformer, respectively, within safe operating area limits.

The control mode and, with it, the references as well as the measurement powers of the respective active and reactive power can be switched individually and on the fly. Advantageously, the control device still manages the overall power flow of the power converter to operate within the local safe operating area to avoid any damage. Furthermore, with this method it is possible to use the full power converter capabilities while also guaranteeing safe operation in the remote transformer. This is achieved by additional switching of the provided remote power information as an input of the remote safe operating area.

The possibility to actively control a remote substation comprising the transformer and a local substation comprising the power converter simultaneously makes the power converter more versatile regarding customer needs due to grid complexity. In particular, the control modes of the active power and the reactive power control can be switched independently and safe operation is always guaranteed locally and remotely.

According to a further embodiment of the method, the limited local power information is determined dependent on the control mode being a remote control mode and/or a local control mode. This is to say that the control mode can be a remote control mode and/or a local control mode, based on which the control loops are implemented.

Exemplarily, the remote measured active power or the remote reference active power is provided dependent on the control mode. If the remote measured active power is provided, in particular as the input to the remote safe operating area, the limited remote measured active power is determined, in particular as an output of the remote safe operating area. If the remote reference active power is provided, in particular as the input to the remote safe operating area, the limited remote reference active power is determined, in particular as an output of the remote safe operating area.

Exemplarily, the remote measured reactive power or the remote reference reactive power is provided dependent on the control mode. If the remote measured reactive power is provided, in particular as the input to the remote safe operating area, the limited remote measured reactive power is determined, in particular as an output of the remote safe operating area. If the remote reference reactive power is provided, in particular as the input to the remote safe operating area, the limited remote reference reactive power is determined, in particular as an output of the remote safe operating area.

Particularly, the provision of the remote measured active power or the remote reference active power regarding the first string and the provision of the remote measured reactive power or the remote reference reactive power regarding the second string are selectable independently from one another.

According to a further embodiment of the method, the active power of the limited local power information is determined dependent on the remote control mode or the local control mode. Exemplarily, for the remote control mode, the remote reference active power is provided. Exemplarily, for the remote control mode, the remote reference reactive power is provided.

Advantageously the capabilities and robustness of the power converter are augmented when remote control is a requirement. This is an advantage when the transformer has to be controlled remotely.

According to a further embodiment of the method, the reactive power of the limited local power information is determined dependent on the remote control mode or the local control mode. Exemplarily, for the local control mode, the remote measured active power is provided based on which the limited local power information is determined. Exemplarily, for the local control mode, the remote measured reactive power is provided based on which the limited local power information is determined.

According to a further embodiment of the method, the remote power information is characteristic for at least one of a remote reference power and a remote measured power dependent on the control mode. The remote reference power exemplarily comprises the remote reference active power, particularly being provided for the remote control mode. The remote reference power exemplarily comprises the remote reference reactive power, particularly being provided for the remote control mode. The remote reference power exemplarily comprises the remote measured active power, particularly being provided for the local control mode. The remote reference power exemplarily comprises the remote measured reactive power, particularly being provided for the local control mode.

According to a further embodiment of the method, the limited remote power information is characteristic for at least one of a limited remote reference power and a limited remote measured power dependent on the control mode. In particular, the limited remote power information is characteristic for at least one of the limited remote reference power and the limited remote measured power dependent on the remote power information provided.

The limited remote reference power exemplarily comprises the limited remote reference active power, being particularly determined for the remote control mode. The limited remote reference power exemplarily comprises the limited remote reference reactive power, being particularly determined for the remote control mode. The limited remote reference power exemplarily comprises the limited remote measured active power, being particularly determined for the local control mode. The limited remote reference power exemplarily comprises the limited remote measured reactive power, being particularly determined for the local control mode.

According to a further embodiment of the method, corrected remote power information is determined dependent on the limited remote power information and a remote measured power.

According to a further embodiment of the method, the corrected remote power information is characteristic of the remote measured power minus at least one of the limited remote reference power and the limited remote measured power dependent on the control mode. In particular, the corrected remote power information is characteristic of the remote measured power minus at least one of the limited remote reference power and the limited remote measured power dependent on the determined limited remote power information.

If the limited remote reference active power is determined, the limited remote reference active power is subtracted from the remote measured active power for the corrected remote power information. If the limited remote measured active power is determined, the limited remote measured active power is subtracted from the remote measured power for the corrected remote power information. If the limited remote reference reactive power is determined, the limited remote reference reactive power is subtracted from the remote measured reactive power for the corrected remote power information. If the limited remote measured reactive power is determined, the limited remote measured reactive power is subtracted from the remote measured repower for the corrected remote power information.

According to a further embodiment of the method, the local power information is characteristic for at least one of a local reference power and a local measured power dependent on the control mode. In particular, the local power information is characteristic for at least one of the local reference power and the local measured power dependent on the remote power information provided.

If the remote reference active power is provided, the local power information comprises the local measured active power being particularly provided. If the remote measured active power is provided, the local power information comprises the local reference active power being particularly provided. If the remote reference reactive power is provided, the local power information comprises the local measured reactive power being particularly provided. If the remote measured reactive power is provided, the local power information comprises the local reference reactive power being particularly provided.

According to a further embodiment of the method, unlimited local power information is determined dependent on the local power information and corrected remote power information or the local power information and additional filtered power information. The unlimited local power information comprises the unlimited local reference active power and the unlimited local reference reactive power. The unlimited local power information is determined in particular dependent on the control mode.

The unlimited local reference active power is determined for the local control mode dependent on the local power information, particularly the local reference active power, and the corrected remote power information, particularly comprising the remote measured active power minus the limited remote measured active power. The unlimited local reference active power is determined for the remote control mode dependent on the local power information, particularly the local measured active power, and the corrected remote power information, particularly comprising the remote measured active power minus the limited remote reference active power.

The unlimited local reference reactive power is determined for the local control mode dependent on the local power information, particularly the local reference reactive power, and the corrected remote power information, particularly comprising the remote measured reactive power minus the limited remote measured reactive power. The unlimited local reference reactive power is determined for the remote control mode dependent on the local power information, particularly the local measured reactive power, and the corrected remote power information, particularly comprising the remote measured reactive power minus the limited remote reference reactive power.

For example, the additional filtered power information comprises a proportional term with a first gain factor, an integral term with a second gain factor, and a decay term with a third gain factor. The third gain factor is small compared to the first and the second gain factor. Exemplarily, the proportional term is characteristic for a difference of the remote measured power minus the respective limited remote reference power. Exemplarily, the integral term is characteristic for time integral over the remote measured power minus the respective limited remote reference power. Exemplarily, the decay term is characteristic for an exponential decay dependent on a difference of a maximum power rating of the transformer minus the respective limited remote reference power.

Exemplarily, the unlimited local reference active power is determined for the local control mode dependent on the local power information, particularly the local reference active power and the additional filtered power information, particularly comprising the limited remote measured active power. The unlimited local reference reactive power is determined for the local control mode dependent on the local power information, particularly the local reference reactive power and the additional filtered power information, particularly comprising the limited remote measured reactive power.

The additional filtered power information is exemplarily not used to determine the unlimited local reference active power in the remote control mode.

Advantageously, the additional filtered power information is applied to the remote measured power to a guarantee smooth control without oscillations and to retain a correct operating point. This advantageously enables the power converter to use the full power potential and the local power of the power converter is only adapted and/or limited if the remote power of the transformer exceeds safe limits.

According to a further embodiment of the method, the limited local power information of the power converter is determined dependent on the unlimited local power information and the local safe operating area of the power converter.

Exemplarily, the determined unlimited local reference active power is the input to the local safe operating area, and the limited local reference active power is determined in particular as an output of the local safe operating area. Exemplarily, the determined unlimited local reference reactive power is the input to the local safe operating area, and the limited local reference reactive power is determined in particular as an output of the local safe operating area.

According to a further embodiment of the method, the remote reference power and the local measured power are provided for the remote control mode, and the remote measured power and the local reference power are provided for the active control mode.

According to a further embodiment of the method, the remote safe operating area and/or the local safe operating area are additionally dependent on an external limit information. For example, the external limit information includes, inter alia, limitations of the first grid and/or the second grid, limitations on feed-in power of the transformer and/or the power converter, contract limits.

According to a further embodiment of the method, the remote safe operating area and/or the local safe operating area are additionally dependent on state information. For example, the state information includes, inter alia, limitations due to at least one of a temperature of components of the transformer and/or the power converter, a current and a voltage of the transformer and/or the power converter.

A further embodiment relates to a control device for controlling a transformer by a control device of a power converter, wherein the power converter is arranged remote from the transformer and is, in particular, configured to perform the method described herein above. Therefore, the features as described in connection with the control device are also applicable to the method and vice versa.

A further embodiment relates to a system for controlling a transformer by a control device of a power converter, wherein the power converter is arranged remote from the transformer, particularly comprising the control device. Therefore, the features as described in connection with the system are also applicable to the control device and vice versa.

According to an embodiment, the system comprises a transformer, and the system comprises a control device of the power converter as described herein above.

According to the embodiment of the system, the transformer is arranged within a first grid, and the power converter is connected to the first grid and a second grid.

Exemplarily, the transformer and the power converter are connected to the catenary wire.

According to a further embodiment of the system, the control device is configured to remote control an active power and a reactive power of the transformer.

According to a further embodiment of the system, power at a first power output to which the control device and the transformer are connected is dependent on the power provided by the transformer and the power converter.

Exemplarily, power at the catenary wire is dependent on the power provided by the transformer and the power converter.

A further embodiment relates to a computer program comprising instructions which, when the computer program is executed by a computing device, cause the computer program to execute the method described herein above. In particular, the computer program can be implemented as hardware control, software control and/or firmware control or combinations thereof.

A further embodiment relates to a computer-readable storage medium on which the computer program product described herein above is stored.

The accompanying Figures are included to provide a further understanding. In the Figures, elements of the same structure and/or functionality may be referenced by the same reference signs. It is to be understood that the embodiments shown in the Figures are illustrative representations and are not necessarily drawn to scale.

Figure 1 schematically shows a system according to an exemplary embodiment.

Figures 2 and 3 schematically shows a flow diagram of the method according to an exemplary embodiment.

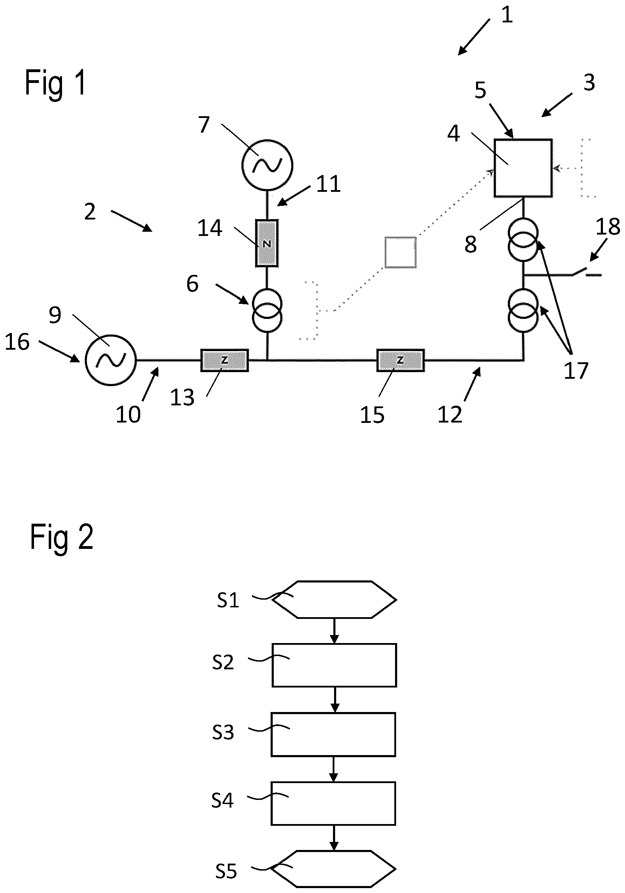

The system 1 according to the exemplary embodiment of Figure 1 comprises a transformer 6 and a power converter 5 with a control device 4 configured to remote control the transformer 6. The system 1 further comprises a first grid 2.

The first grid 2 has a first power input 7 connected to the transformer 6 and a first power output 9 connected to the transformer 6. In particular, the transformer 6 is arranged between the first power input 7 and the first power output 9. In particular, the first power output 9 is characteristic of a catenary wire for providing power to a load 16, e.g. a train.

A voltage of the first grid 2 at the first power input 7 is, for example, 123 kV. A voltage to be provided to the first power output 9 is, for example, 15 kV. The transformer 6 particularly comprises at least one transformer configured to step down the voltage at the first power input 7 to the voltage to be provided to the first power output 9.

A first power line 10 of the first grid 2 between the first power output 9 and the transformer 6 is characteristic of a first impedance 13. A second power line 11 of the first grid 2 between the first power input 7 and the transformer 6 is characteristic of a second impedance 14. An impedance, particularly such as the first and second impedances 13, 14, is characteristic of a complex quantity that represents an opposition that a circuit presents to a flow of an alternating current. In particular, the impedance comprises a resistance and a reactance, which are related to effects of a capacitance and an inductance in the circuit.

The power converter 5 is arranged remote from the transformer 6, in particular the power converter 5 is spaced apart from the transformer 6 at a distance of at least 1 km. The power converter 5 is arranged between the first grid 2 and the second grid 3. The first grid 2 has a second power input 8 to which the power converter 5 is connected. The power converter 5 is connected to the first power output 9 via the second power input 8.

A third power line 12 of the first grid 2 between the first power output 9 and the power converter 5 is characteristic of a third impedance 15. Exemplarily, further transformers 17 are arranged between the first power output 9 and the power converter 5 at the third power line 12. Additionally, it is possible that an additional power input is connectable via a switch 18 to the third power line 12.

The first grid 2 is configured to be operated with a first frequency and the second grid 3 is configured to be operated with a second frequency. Exemplarily, the power converter 5 is configured to change the second frequency to the first frequency. In particular, the power converter 5 is further configured to step down the voltage of the second grid 3 to the voltage to be provided to the first power output 9.

In method stage S1 in Figure 2, remote power information at a location of the transformer is provided. The remote power information comprises a remote reference active power $P_{ref,rem}$ or a remote measured active power $P_{rem}$ and a remote reference reactive power $Q_{ref,rem}$ or a remote measured reactive power $Q_{rem}$. For a remote control mode, the remote power information comprises the remote reference active power $P_{ref,rem}$ being provided and/or the remote reference reactive power $Q_{ref,rem}$ being provided. For a local control mode, the remote power information comprises the remote measured active power $P_{rem}$ being provided and/or the remote measured reactive power $Q_{rem}$ being provided.

It is possible that the remote power information comprises one of the following combinations dependent on the control mode: the remote reference active power $P_{ref,rem}$ and the remote reference reactive power $Q_{ref,rem}$, the remote measured active power $P_{rem}$ and the remote reference reactive power $Q_{ref,rem}$, the remote reference active power $P_{ref,rem}$ and the remote measured reactive power $Q_{rem}$, the remote measured active power $P_{rem}$ and the remote measured reactive power $Q_{rem}$.

In a subsequent method stage S2, limited remote power information of the transformer is determined dependent on the remote power information and a remote safe operating area $SOA_{rem}$ of the transformer. The remote power information relating to the active power is inputted to the remote safe operating area $SOA_{rem}$, particularly to a first remote safe operating area function $S_{1,r}$, which is configured to output a respective limited remote power information relating to an active power. The remote power information relating to the reactive power is inputted to the remote safe operating area $SOA_{rem}$, particularly to a second remote safe operating area function $S_{2,r}$, which is configured to output a respective limited remote power information relating to a reactive power.

It is possible that the limited remote power information comprises one of the following combinations dependent on the control mode, in particular dependent on the provided remote power information: the limited remote reference active power $P_{ref,rem,lim}$ and the limited remote reference reactive power $Q_{ref,rem,lim}$, the limited remote measured active power $P_{rem,lim}$ and the limited remote reference reactive power $Q_{ref,rem,lim}$, the limited remote reference active power $P_{ref,rem,lim}$ and the limited remote measured reactive power $Q_{rem,lim}$, the limited remote measured active power $P_{rem,lim}$ and the limited remote measured reactive power $Q_{rem,lim}$.

Subsequently, in method stage S3, local power information is provided at a location of the power converter. The local power information comprises local reference active power $P_{ref,loc}$ or local measured active power $P_{loc}$ and local reference reactive power $Q_{ref,loc}$ or local measured reactive power $Q_{loc}$. For a remote control mode, the local power information comprises the local measured active power $P_{loc}$ being provided and/or the local measured reactive power $Q_{loc}$ being provided. For a local control mode, the local power information comprises the local reference active power $P_{ref,loc}$ being provided and/or the local reference reactive power $Q_{ref,loc}$ being provided.

It is possible that the local power information comprises one of the following combinations dependent on the control mode: the local reference active power $P_{ref,loc}$ and the local reference reactive power $Q_{ref,loc}$, the local measured active power $P_{loc}$ and the local reference reactive power $Q_{ref,loc}$, the local reference active power $P_{ref,loc}$ and the local measured reactive power $Q_{loc}$, the local measured active power $P_{loc}$ and the local measured reactive power $Q_{loc}$.

In method stage S4, a limited local power information of the power converter is determined dependent on the local power information and a local safe operating area $SOA_{loc}$ of the power converter. The local power information as well as the corrected remote power information, both relating to the active power, are inputted to the local safe operating area $SOA_{loc}$, particularly to a first local safe operating area function $S_{1,1}$ which is configured to output a respective limited local power information relating to an active power. The local power information as well as the corrected remote power information, both relating to the reactive power, are inputted to the local safe operating area $SOA_{loc}$, particularly to a second local safe operating area function $S_{2,r}$ which is configured to output a respective limited local power information relating to a reactive power.

The limited local power information particularly comprises limited local reference active power $P_{ref,loc,lim}$ and limited local reference reactive power $Q_{ref,loc,lim}$.

In method stage S5, the transformer is controlled dependent on the limited local power information of the power converter, wherein the limited local power information is characteristic for an active power and a reactive power based on which the power converter is operated, and the control mode of the active power and the reactive power of the limited local power information are selected independently from one another.

This means that the active power can be controlled with the remote control mode and the reactive power can be controlled with the local control mode or vice versa. Additionally, it is possible that both the active power and the reactive power can be controlled with the remote control mode or with the local control mode.

Advantageously, an active and a reactive power of the transformer is controlled with the active and the reactive power outputted by the power converter dependent on the determined limited local power information. Exemplarily it is feasible that the active power of the transformer is remotely controlled by the remote control mode and simultaneously the reactive power of the power converter is controlled locally by the local control mode or vice-versa, particularly while guaranteeing operation within the respective safe operating areas.

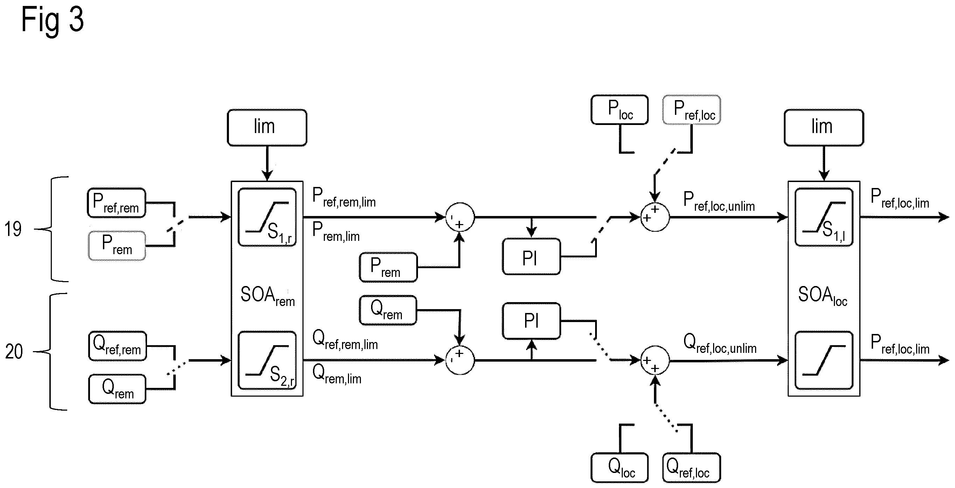

A schematic flowchart of the method described in connection with Figure 2 is described in more detail with respect to the active power and reactive power components in connection with Figure 3.

The determination of the limited local reference active power $P_{ref,loc,lim}$ is implemented in a first string 19 of the method and the determination of the limited local reference reactive power $Q_{ref,loc,lim}$ is implemented in a second string 20 of the method. The first string 19 and the second string 20 are executed with individual control modes.

In particular, the dashed lines shown in Figure 3 are characteristic for switchable paths. Particularly, the local control mode is illustrated as an example.

The remote safe operating area $SOA_{rem}$ and the local safe operating area $SOA_{loc}$, in particular the corresponding functions, are dependent on predeterminable power limitations. Exemplarily, the predeterminable power limitations are in the control mode, for example, defined as

$$P_{max} = f\big(S_{max,loc}, S_{max,rem}, P_{rem}, Q_{rem}, Q_{ref,loc,unlim}\big),$$

and

$$Q_{max} = f\left(S_{max,loc}, S_{max,rem}, P_{rem}, Q_{rem}, P_{ref,loc,unlim}\right),$$

wherein $S_{max,loc}$ is characteristic for a maximum value of the local safe operating area $SOA_{loc}$ and the $S_{max,rem}$ is characteristic for a maximum value of the remote safe operating area $SOA_{rem}$.

In particular, the limited local reference active power $P_{ref,loc,lim}$ and the limited local reference reactive power $Q_{ref,loc,lim}$ are determined dependent on an unlimited local reference active power $P_{ref,loc,unlim}$ and a unlimited local reference reactive power $Q_{ref,loc,unlim}$.

When in remote control mode, the unlimited local reference active power $P_{ref,loc,unlim}$ and the unlimited local reference reactive power $Q_{ref,loc,unlim}$ are

$$P_{ref,loc,unlim} = -P_{ref,rem,lim} + P_{rem} + P_{loc},$$

and

$$Q_{ref,loc,unlim} = -Q_{ref,rem,lim} + Q_{rem} + Q_{loc}.$$

Advantageously, the remote measured active power $P_{rem}$ and the remote measured reactive power $Q_{rem}$ keep the power converter at a necessary operating point.

When in local control mode, the unlimited local reference active power $P_{ref,loc,unlim}$ and the unlimited local reference reactive power $Q_{ref,loc,unlim}$ are

$$P_{ref,loc,unlim} = P_{rem} - P_{rem,lim} + P_{ref,loc},$$

and

$$Q_{ref,loc,unlim} = Q_{rem} - Q_{rem,lim} + Q_{ref,loc}.$$

The unlimited local power information can be further determined dependent on the local power information and corrected remote power information or the local power information and additional filtered power information PI in the local control mode. The additional filtered power information PI comprises additional filtered active power $P_{rem,PI}$ and/or additional filtered reactive power $Q_{rem,PI}$.

Each additional filtered active power $P_{rem,PI}$ and/or additional filtered reactive power $Q_{rem,PI}$ is exemplarily dependent on $K_p$ being a first gain factor, Ki being a second gain factor and $K_t$ being a third gain factor. In order to empty the integral term, a decay term with the gain factor *Kt << Kp, Ki* is added to operate the power converter to a base operation point when the transformer is not overloaded (*e.g.* $P_{rem}$ - $P_{rem,lim}$ = 0). The decay term's dynamics are slower than the dynamics of the additional filtered power information PI so that it does not counteract the control.

Thus, when in local control mode and considering the additional filtered power information PI, the unlimited local reference active power $P_{ref,loc,unlim}$ and the unlimited local reference reactive power $Q_{ref,loc,unlim}$ are

$$P_{ref,loc,unlim} = P_{rem,PI} + P_{ref,loc},$$

and

$$Q_{ref,loc,unlim} = Q_{rem,PI} + Q_{ref,loc}.$$

This enables the power converter to use the full power potential and local power is only adapted and/or limited if the remote power exceeds save limits.

The embodiments and exemplary embodiments described herein above can be combined accordingly.

Reference Signs

| | |
|---|---|
| 1 | system |
| 2 | first grid |
| 3 | second grid |
| 4 | control device |
| 5 | power converter |
| 6 | transformer |
| 7 | first power input |
| 8 | second power input |
| 9 | first power output |
| 10 | first power line |
| 11 | second power line |
| 12 | third power line |
| 13 | first impedance |
| 14 | second impedance |
| 15 | third impedance |
| 16 | load |
| 17 | further transformers |
| 18 | switch |
| 19 | first string |
| 20 | second string |

| | |
|---|---|
| $P_{ref,rem}$ | remote reference active power |
| $P_{rem}$ | remote measured active power |
| $Q_{ref,rem}$ | remote reference reactive power |
| $Q_{rem}$ | remote measured reactive power |
| $P_{ref,rem,lim}$ | limited remote reference active power |
| $P_{rem,lim}$ | limited remote measured active power |
| $Q_{ref,rem,lim}$ | limited remote reference reactive power |
| $Q_{rem,lim}$ | limited remote measured reactive power |

| | |
|---|---|
| $P_{ref,loc}$ | local reference active power |
| $P_{loc}$ | local measured active power |
| $Q_{ref,loc}$ | local reference reactive power |
| $Q_{loc}$ | local measured reactive power |
| $P_{ref,loc,unlim}$ | unlimited local reference active power |
| $Q_{ref,loc,unlim}$ | unlimited local reference reactive power |
| $P_{ref,loc,lim}$ | limited local reference active power |
| $Q_{ref,loc,lim}$ | limited local reference reactive power |

| | |
|---|---|
| $SOA_{rem}$ | remote safe operating area |
| $SOA_{loc}$ | local safe operating area |
| $S_{1,r}$ | first remote safe operating area function |
| $S_{2,r}$ | second remote safe operating area function |
| $S_{1,1}$ | first local safe operating area function |
| $S_{2,1}$ | second local safe operating area function |

| | |
|---|---|
| PI | additional filtered power information |
| $P_{rem,PI}$ | additional filtered active power |
| $Q_{rem,PI}$ | additional filtered reactive power |

**Claims**

**1.** Method for controlling a transformer by a control device of a power converter, wherein the power converter is arranged remote from the transformer, the method comprising:

- providing remote power information at a location of the transformer (S1),
- determining limited remote power information of the transformer dependent on the remote power information and a remote safe operating area ($SOA_{rem}$) of the transformer (S2),
- providing local power information at a location of the power converter (S3), and
- determining limited local power information of the power converter dependent on the local power information and a local safe operating area ($SOA_{loc}$) of the power converter (S4),
- controlling the transformer dependent on the limited local power information of the power converter (S5), wherein
- the limited local power information is characteristic for an active power and a reactive power based on which the power converter is operated, and
- a control mode of the active power and the reactive power of the limited local power information are selected independently from one another.

2. Method according to claim 1, wherein

- the limited local power information is determined dependent on the control mode being a remote control mode and/or a local control mode,
- the active power of the limited local power information is determined dependent on the remote control mode or the local control mode, and
- the reactive power of the limited local power information is determined dependent on the remote control mode or the local control mode.

3. Method according to one of claims 1 to 2, wherein

- the remote power information is characteristic for at least one of a remote reference power and a remote measured power dependent on the control mode.

4. Method according to one of claims 1 to 3, wherein

- the limited remote power information is characteristic for at least one of a limited remote reference power and a limited remote measured power dependent on the control mode.

5. Method according to claim 4, wherein

- corrected remote power information is determined dependent on the limited remote power information and a remote measured power,
- the corrected remote power information is characteristic for the remote measured power minus at least one of the limited remote reference power and the limited remote measured power dependent on the control mode.

6. Method according to one of claims 1 to 5, wherein

- the local power information is characteristic for at least one of a local reference power and a local measured power dependent on the control mode.

7. Method according to one of claims 1 to 5, wherein

- unlimited local power information is determined dependent on the local power information and corrected remote power information or the local power information and an additional filtered power information (PI).

8. Method according to claim 7, wherein

- the limited local power information of the power converter is determined dependent on the unlimited local power information and the local safe operating area ($SOA_{loc}$) of the power converter.

9. Method according to one of claims 1 to 8, wherein

- the remote reference power and the local measured power are provided for the remote control mode, and
- the remote measured power and the local reference power are provided for the active control mode.

10. Method according to one of claims 1 to 9, wherein

- the remote safe operating area ($SOA_{rem}$) and/or the local safe operating area ($SOA_{loc}$) are additionally dependent on external limit information, and/or
- the remote safe operating area ($SOA_{rem}$) and/or the local safe operating area ($SOA_{loc}$) are additionally dependent on state information.

11. Control device configured to perform the method according to one of claims 1 to 10.

12. System comprising

- a transformer, and
- a control device of a power converter according to claim 11, wherein
- the transformer is arranged within a first grid, and
- the power converter is connected to the first grid and a second grid.

13. System according to claim 12, wherein

- the control device is configured to control an active power and a reactive power of the transformer, and wherein
- power at a first power output to which the power converter and the transformer are connected is dependent on power provided by the transformer and the power converter.

14. Computer program comprising instructions which, when the computer program is executed by a computing device, cause the computer program to execute the method according to one of claims 1 to 10.

15. Computer-readable storage medium, on which the computer program according to claim 14 is stored.

# Fig 1

# Fig 2

Fig 3

EP 4 645 624 A1

Europäisches
Patentamt
European
Patent Office
Office européen
des brevets

# EUROPEAN SEARCH REPORT

**Application Number**

EP 24 17 3360

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2017/250540 A1 (VARMA RAJIV KUMAR [CA]) 31 August 2017 (2017-08-31) * paragraphs [0078] - [0343]; figures 1-23 * | 1-15 | INV. H02J3/12 H02J3/46 H02J3/48 |
| X | US 2016/172857 A1 (ITAYA NOBUHIKO [JP]) 16 June 2016 (2016-06-16) * paragraphs [0030] - [0135]; figures 1-13 * | 1-15 | H02J3/50 H02J13/00 |
| A | EP 3 669 433 A1 (VESTAS WIND SYS AS [DK]) 24 June 2020 (2020-06-24) * the whole document * | 1-15 | |

**TECHNICAL FIELDS SEARCHED (IPC)**

H02J

The present search report has been drawn up for all claims

| Place of search | Date of completion of the search | Examiner |
|---|---|---|
| Munich | 15 October 2024 | Hunckler, José |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

......................................................................................

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 24 17 3360

This annex lists the patent family members relating to the patent documents cited in the above-mentioned European search report.
The members are as contained in the European Patent Office EDP file on
The European Patent Office is in no way liable for these particulars which are merely given for the purpose of information.

15-10-2024

| Patent document cited in search report | Publication date | Patent family member(s) | Publication date |
|---|---|---|---|
| US 2017250540 A1 | 31-08-2017 | US 2017250540 A1<br>US 2020036192 A1 | 31-08-2017<br>30-01-2020 |
| US 2016172857 A1 | 16-06-2016 | CN 105453364 A<br>JP 5710082 B1<br>JP WO2015022724 A1<br>US 2016172857 A1<br>WO 2015022724 A1 | 30-03-2016<br>30-04-2015<br>02-03-2017<br>16-06-2016<br>19-02-2015 |
| EP 3669433 A1 | 24-06-2020 | EP 3669433 A1<br>US 2021184462 A1<br>WO 2019034215 A1 | 24-06-2020<br>17-06-2021<br>21-02-2019 |

EPO FORM P0459

For more details about this annex : see Official Journal of the European Patent Office, No. 12/82